# EUROPÄISCHE PATENTANMELDUNG

(11) **EP 1 881 207 A2**
(43) Veröffentlichungstag der Anmeldung: **23.01.2008**
(21) Anmeldenummer: 07111803.8
(22) Anmeldetag: 05.07.2007
(51) Int. Cl.: F16B 7/04

(54) **Verbindungsvorrichtung**

(30) Priorität: 17.07.2006 DE 102006000344
(71) Anmelder: HILTI Aktiengesellschaft, 9494 Schaan (LI)
(72) Erfinder: Hoffmann, Armin, 86899, Landsberg (DE)
(74) Vertreter: Wildi, Roland

(57) **Zusammenfassung**

Eine Verbindungsvorrichtung (20) zum Verbinden von einer ersten Montageschiene (6) mit einer weiteren Montageschiene (11 bzw. 16) weist ein Verbindungselement (21) und zwei Befestigungselemente (51, 56) auf. Das Verbindungselement (21) weist einen Basisabschnitt (22) mit einer Durchführöffnung für ein Befestigungsmittel (41, 46) zum Festlegen des Verbindungselementes (21) an der ersten Montageschiene (6), einen ersten Schenkelabschnitt (26) und einen zweiten Schenkelabschnitt (31) zum Festlegen der weiteren Montageschiene (11 bzw. 16) auf. Der erste Schenkelabschnitt (26) und der zweite Schenkelabschnitt (31) sind jeweils senkrecht zu einer von dem Basisabschnitt (22) aufgespannten Ebene ausgerichtet angeordnet und weisen jeweils eine Öffnung für ein Befestigungselement (51, 56) auf.

## Beschreibung

Die Erfindung betrifft eine Verbindungsvorrichtung zum lösbaren Verbinden von einer ersten Montageschiene mit zumindest einer weiteren Montageschiene, der im Oberbegriff des Patentanspruchs 1 genannten Art.

Für eine flexible Installation von Leitungen, wie Rohren, Lüftungskanälen, Elektrokabeltrassen und dergleichen, im Bereich der Haustechnik oder der Industrie werden beispielsweise Montageschienen eingesetzt, die z. B. mittels einer Verbindungsvorrichtung zu räumlichen Tragkonstruktionen verbunden werden.

Derartige Montageschienen weisen beispielsweise einen C-förmigen Querschnitt mit einer in Längserstreckung der Montageschiene verlaufenden, von zueinander beabstandeten Rändern begrenzte Montageöffnung auf. In dieser Montageöffnung sind Gewindestangen mittels Schienenmuttern festlegbar, an denen Leitungen aufgeständert oder abgehängt werden. Am Bodenabschnitt der Montageschiene sind üblicherweise in Längserstreckung der Montageschiene zueinander beabstandete Öffnungen vorgesehen, die z. B. eine Festlegung der Montageschiene mit Dübeln und Schrauben an einem Untergrund ermöglichen. Der Bodenabschnitt und somit die darin angeordneten Öffnungen sind üblicherweise der Montageöffnung der Montageschiene gegenüberliegend angeordnet.

Weiter sind Doppel-C-Profilschienen bekannt, die aus zwei miteinander vernieteten oder verschweissten C-förmigen Montageschienen gebildet sind und zwei einander gegenüberliegende Montageöffnungen als Anbindemöglichkeiten aufweisen, so dass eine Leitung z. B. ober- und unterhalb der Doppel-C-Profilschiene befestigt werden kann.

Weiter sind auch Gitterträger als Montageschienen bekannt, die einen ersten Traggurt und einen in einem Abstand zum ersten Traggurt angeordneten zweiten Traggurt aufweisen. Der erste Traggurt und der zweite Traggurt sind über zwei in deren Längserstreckung wellenförmig verlaufende Stäbe über deren Wendebereiche miteinander verbunden. Der erste Traggurt und der zweite Traggurt sind jeweils von zwei parallel in einem Abstand zueinander verlaufenden Längsprofilen gebildet, welche ihrerseits über Verbindungsprofile miteinander verbunden sind. Die Längsprofile weisen oftmals eine Profilierung in Form einer Zahnung auf, in welche Hintergreifteile oder Anschläge beim Verspannen formschlüssig eingreifen. Die in Längserstreckung verlaufenden Zwischenräume zwischen den Längsprofilen eines Traggurtes sowie zwischen den Traggurten bilden die Montageöffnungen des Gitterträgers aus.

Aus der EP 0 647 555 A1 ist eine Verbindungsvorrichtung zum lösbaren Verbinden von einer ersten Montageschiene mit einer weiteren Montageschiene bekannt, die einen L-förmigen Winkel als Verbindungselement aufweist. Die Montageschienen weisen jeweils in Längserstreckung der jeweiligen Montageschiene verlaufende Montageöffnungen auf. In den Schenkeln des Winkels sind jeweils zwei Öffnungen für Befestigungselemente vorgesehen. Die Befestigungselemente weisen jeweils ein Hintergreifteil zum Hintergreifen der Montageöffnung einer Montageschiene sowie eine Spannschraube als Spannmittel auf.

Nachteilig an der bekannten Lösung ist, dass zum Verbinden der Montageschienen bei einer Gewährleistung einer ausreichenden Tragfähigkeit der erstellten Verbindung jeweils zwei Verbindungsvorrichtungen bei jedem Knotenpunkt zweier Montageschienen vorgesehen werden müssen. Zudem ist diese Art der Verbindung mit einem grossen Montageaufwand verbunden.

Aus der DE 10 2004 014 515 A1 ist eine Verbindungsvorrichtung zum lösbaren Verbinden von im Querschnitt geschlossenen Hohlprofilen für Fassaden, Fenster, Vordächer und dergleichen bekannt, die ein Verbindungselement mit einem Basisabschnitt und zwei von dem Basisabschnitt abragende Schenkelabschnitte aufweist. Das Verbindungselement wird mittels durch den Basisabschnitt hindurchgeführten Schrauben an einem ersten Hohlprofil festgelegt. Das mit dem ersten Hohlprofil zu verbindende zweite Hohlprofil wird über die Schenkelabschnitte geführt, wobei diese das zweite Hohlprofil klemmend an dem ersten Hohlprofil halten.

Nachteilig an der bekannten Lösung ist, dass eine lediglich klemmende Verbindung den Anforderungen, die an Tragkonstruktionen für Leitungsinstallationen gestellt werden, z. B. in Bezug auf die Tragfähigkeit nicht genügt. Zudem ist bei Montageschienen, die an zumindest einer Seite eine in deren Längserstreckung verlaufende Montageöffnung aufweisen, die Kontaktfläche derart begrenzt, dass diese nur bedingt eine ausreichende Haltekraft erzeugen kann.

Aus der DE 43 06 877 A1 ist eine Verbindungsvorrichtung zum lösbaren Verbinden von Strangguss-Profilstäben bekannt, die an allen Aussenseiten in deren Längserstreckung verlaufende Montageöffnungen aufweisen. Die Verbindungsvorrichtung weist zwei Winkel auf, in deren Schenkel jeweils zwei Befestigungselemente angeordnet sind. Die Befestigungselemente weisen jeweils ein Hintergreifteil und eine Spannschraube auf.

Nachteilig an den bekannten Lösung ist, dass diese Verbindungsvorrichtung material- und montageaufwändig ist, da zur Festlegung eines Profilstabes an dem anderen Profilstab jeweils zwei Winkel angeordnet und acht verhältnismässig materialintensive Befestigungselemente verspannt werden müssen.

Aufgabe der Erfindung ist es, eine Verbindungsvorrichtung für Montageschienen insbesondere mit in Längserstreckung der Montageschiene verlaufenden Montageöffnungen zu schaffen, die eine einfache Verbindung der Montageschienen ermöglicht und wirtschaftlich herstellbar ist.

Die Aufgabe ist durch die Merkmale des unabhängigen Anspruchs gelöst. Vorteilhafte Weiterbildungen sind in den Unteransprüchen dargelegt.

Gemäss der Erfindung weist das Verbindungselement einen Basisabschnitt mit einer Durchführöffnung für ein Befestigungsmittel zum Festlegen des Verbindungselementes an einer ersten Montageschiene, einen ersten Schenkelabschnitt und einen zweiten Schenkelabschnitt auf. Der erste Schenkelabschnitt und der zweite Schenkelabschnitt sind jeweils senkrecht zu einer von dem Basisabschnitt aufgespannten Ebene ausgerichtet und beabstandet zueinander an dem Basisabschnitt zum Festlegen der zumindest einen weiteren Montageschiene angeordnet. Der erste Schenkelabschnitt und der zweite Schenkelabschnitt weisen jeweils zumindest eine Öffnung für zumindest ein Befestigungselement auf.

Das Verbindungselement weist im Wesentlichen eine U-förmige Ausgestaltung auf, wobei die Schenkelabschnitte innerhalb des von der Montageschiene aufgespannten Raums mit der Montageschiene in Anlage kommen. Die Schenkelabschnitte bilden jeweils ein Hintergreifteil zum Hintergreifen der Montageöffnung der zumindest einen weiteren Montageschiene beziehungsweise des die Montageöffnung umgebenden Bereichs aus. Über die Befestigungselemente wird die zumindest eine weitere Montageschiene sicher und einfach an der ersten Montageschiene lösbar festgelegt. Der Abstand des ersten Schenkelabschnitts und des zweiten Schenkelabschnitts ist vorteilhaft derart gewählt, dass dieser im Wesentlichen dem inneren Abstand zwischen den entsprechenden Wandabschnitten der Montageschiene entspricht. Für z. B. hoch belastete Verbindungen können an einem Schenkelabschnitt auch zwei oder mehr Öffnungen vorgesehen sein, in denen jeweils ein Befestigungselement angeordnet ist.

Die erfindungsgemässe Verbindungsvorrichtung ist insbesondere zum lösbaren Verbinden von Gitterträger oder von Doppel-C-Profilschienen ausgebildet, die zwei einander gegenüberliegend angeordnete Montageöffnungen aufweisen. Bei derartigen Montageschienen können diese über die Schenkelabschnitte, welche bereits vormontiert die Befestigungselemente aufweisen, eines an der ersten Montageschiene festgelegten Verbindungselementes geschoben werden, was eine einfache und schnelle Montage der zu erstellenden Verbindung der Montageschienen ermöglicht. Bei einem abgelängten Gitterträger dient das Verbindungselement und somit die Verbindungsvorrichtung zusätzlich der Aussteifung der freien Enden des Gitterträgers, so dass dieser nicht zwingend in der Nähe eines Befestigungspunktes der die Traggurte verbindenden Stabes abgelängt werden muss. Damit kann ein Gitterträger weitgehend über seine gesamte Länge verwendet werden und es fallen weniger Abschnitte des Gitterträgers an, die nicht weiterverwendbar sind und daher entsorgt werden müssen. Dadurch lassen sich die Erstellungskosten für eine Tragkonstruktion aus Gitterträgern gegenüber Tragkonstruktion mit herkömmlichen Verbindungsvorrichtungen senken.

Die Verbindungsvorrichtung kann jedoch auch zum lösbaren Verbinden von C-förmigen Montageschienen dienen, wobei einer der Schenkelabschnitte beispielsweise klemmend auf den, der Montageöffnung gegenüberliegenden Wandabschnitt wirkt. Weist dieser Wandabschnitt Öffnungen auf, so kann durch diese und der zumindest einen Öffnung in dem entsprechenden Schenkelabschnitt ein Befestigungselement angeordnet und dieser Schenkelabschnitt ebenfalls wie der andere Schenkelabschnitt mit der zumindest einen weiteren Montageschiene verspannt werden. Die zumindest eine Öffnung für die Befestigungselemente in den Schenkelabschnitten des Verbindungselementes können als Langlöcher ausgebildet sein, welche sich beabstandet von dem Basisabschnitt in Richtung des freien Endes des jeweiligen Schenkelabschnitts über einen gewissen Bereich erstrecken.

Die Verbindungsvorrichtung wird vorteilhaft auf die Längserstreckung der ersten Montageschiene ausgerichtet an derselben festgelegt. Dabei können zwei benachbarte Verbindungsvorrichtungen auch um eine Achse des Befestigungsmittels verdreht zueinander, z. B. um 90° verdreht, an der ersten Montageschiene festgelegt sein.

Das Verbindungselement wird mit dem Basisabschnitt an der gewünschten Position mit der ersten Montageschiene in Anlage gebracht und beispielsweise mittels einer Spannschraube als Teil des Befestigungsmittels an dieser lösbar festgelegt. Die erste Durchführöffnung im Basisabschnitt weist beispielsweise Innengewindeabschnitte auf, in welche die Spannschraube direkt eingreift. In einer Variante dazu ist eine Mutter vorgesehen, die über das freie Ende der Spannschraube zum Verspannen des Verbindungselementes an der ersten Montageschiene geführt wird. Anschliessend wird die zumindest eine weitere Montagescheine über die freien Enden der Schenkelabschnitte des Verbindungselementes geschoben und über die Befestigungselemente an diesen verspannt.

Mit zwei, an zwei einander gegenüberliegenden Seiten der ersten Montageschiene angeordneten Verbindungselementen, die über ein gemeinsames Befestigungsmittel an derselben festgelegt sind, lassen sich einfach Kreuzverbindungen der Montageschienen herstellen. Dabei kann eines der Verbindungselemente auch um eine Achse des Befestigungsmittels verdreht, z. B. um 90° verdreht, zu dem anderen Verbindungselement angeordnet sein.

Vorzugsweise ist an dem ersten Schenkelabschnitt und an dem zweiten Schenkelabschnitt jeweils eine an deren Seitenrändern angeordnete Profilierung vorgesehen, die sich von dem Basisabschnitt in Richtung eines freien Endes des jeweiligen Schenkelabschnitts erstreckt. Die Profilierung ist an den Seiten des jeweiligen Schenkelabschnitts angeordnet, die dem anderen Schenkelabschnitt abgewandt ist. Mit der Profilierung wird die Haltekraft im Kontaktbereich zwischen dem entsprechenden Schenkelabschnitt und den die Montageöffnung der entsprechenden Montageschiene begrenzenden Rändern im verspannten Zustand der Befestigungselemente erhöht und somit die Verbindung zwischen der ersten Montageschiene und der daran festzulegenden, zumindest einen weiteren Montageschiene zusätzlich gesichert.

Bevorzugt ist zumindest einer der Schenkelabschnitte über Federbereiche mit dem Basisabschnitt verbunden, wodurch eine gewisse Federbeaufschlagung auf die Innenwandung beziehungsweise auf den die Montageöffnung der Montageschiene umgebenden beziehungsweise benachbarten Bereich ausgeübt wird. Die zumindest eine weitere Montageschiene ist infolge der Federbeaufschlagung temporär an der ersten Montageschiene bis zum Verspannen der Befestigungselemente gehalten, wodurch der Aufwand bei der Montage wesentlich reduziert wird. Zudem lassen sich allfällige Herstellungstoleranzen der Teile untereinander ausgleichen.

Vorzugsweise ist eine zu den Seitenrändern des Basisabschnitts beabstandete taschenartige Vertiefung an dem Basisabschnitt ausgebildet. Die Vertiefung erstreckt sich von der von dem Basisabschnitt aufgespannten Ebene mit einer Tiefe und ist von einem von dem ersten Schenkelabschnitt und dem zweiten Schenkelabschnitt gebildeten Raum abgewandt. Die von der taschenartigen Vertiefung geschaffene Aufnahme dient z. B. einer formschlüssigen Aufnahme eines Mutterelementes des Befestigungsmittels zum Festlegen des Verbindungselementes an der ersten Montageschiene. Infolge der formschlüssigen Aufnahme des Mutterelementes muss diese beim Verspannen des Befestigungsmittels nicht gegengehalten werden, was die Montage des Verbindungselementes an der ersten Montageschiene und somit der gesamten Verbindungsvorrichtung wesentlich vereinfacht.

Vorteilhaft ist zumindest eine der parallel zu der von dem Basisabschnitt aufgespannten Ebene verlaufenden Abmessungen der taschenartigen Vertiefung derart gewählt, dass diese maximal der quer zur Längserstreckung der Montageschiene gemessenen Breite der Montageöffnung der ersten Montageschiene entspricht, so dass beim Anlegen des Verbindungselementes an die erste Montageschiene der Basisabschnitt zumindest bereichsweise in die Montageöffnung eindringt und somit quer zur Längserstreckung der Montageöffnung fixiert ist. Vorteilhafterweise weisen beide parallel zu der von dem Basisabschnitt aufgespannten Ebene verlaufenden Abmessungen der taschenartigen Vertiefung jeweils eine Erstreckung auf, die maximal der Breite der Montageöffnung der ersten Montageschiene entspricht. Besonders vorteilhaft sind beide genannten Abmessungen der taschenartigen Vertiefung gleich gross, wodurch das Verbindungselement in allen um 90° verdrehten Positionen mit der taschenartigen Vertiefung in die Montageöffnung der ersten Montageschiene eindringen kann. Die Tiefe der taschenartigen Vertiefung ist vorteilhaft derart gewählt, dass diese nicht grösser als die parallel dazu verlaufende Erstreckung der die Montageöffnung begrenzenden Ränder ist. Im angelegten beziehungsweise im verspannten Zustand des Verbindungselementes an der ersten Montageschiene bleibt der von der Montageschiene umschlossene Raum frei und ist, beispielsweise bei einer Gitterschiene von aussen, weiterhin zugänglich. Wird eine zuvor verspannte Verbindungsvorrichtung wieder teilweise gelöst, kann die Verbindungsvorrichtung aufgrund der von den Rändern der Montageöffnung geschaffenen Führung entlang der ersten Montageschiene einfach verschoben werden.

Bevorzugt ist eine Profilierung an zumindest zwei, einander gegenüberliegenden Seitenrändern des Basisabschnitts vorgesehen. Mit der Profilierung wird die Haltekraft im Kontaktbereich zwischen dem Basisabschnitt und den die Montageöffnung der ersten Montageschiene begrenzenden Rändern im verspannten Zustand des Befestigungsmittels erhöht und somit die sichere Verbindung zwischen der ersten Montageschiene und der daran festzulegenden, zumindest einen weiteren Montageschiene zusätzlich gesichert.

Vorzugsweise ist die Profilierung eine Zahnung, wodurch ein formschlüssiger Eingriff des entsprechenden Abschnitts des Verbindungselementes mit der anliegenden Fläche der entsprechenden Montageschiene gewährleistet ist. Vorteilhaft ist die Zahnung komplementär zu einer an den die Montageöffnung der Montageschiene begrenzenden Rändern angeordnete Zahnung ausgebildet.

Bevorzugt weist das Befestigungselement einen Anschlag auf, der mit der zumindest einen weiteren Montageschiene in Anlage bringbar ist. Der Anschlag dient als Unterlegteil für eine Spannschraube des Befestigungselementes und stellt eine bereichsweise flächige Anlage an der Aussenseite der zumindest einen weiteren Montageschiene sicher. Vorteilhaft weist auch das Befestigungsmittel zum Festlegen des Verbindungselementes an der ersten Montageschiene einen Anschlag auf.

Vorzugsweise ist der Anschlag des Befestigungselementes ein U-förmiges Bügelelement, dessen freie Schenkel dem jeweiligen Schenkelabschnitt zugewandt sind. Dieser Anschlag gewährleistet im verspannten Zustand des Befestigungselementes beziehungsweise des Befestigungsmittels eine bereichsweise flächige Anlage mit der Aussenseite der Montageschiene für eine ausreichend sichere Verbindung und ermöglicht gleichzeitig ein leichtes Abheben des Anschlages bei einem Lösen einer verspannten Verbindungsvorrichtung.

Bevorzugt sind an jedem freien Schenkel eines Anschlags zwei zueinander beabstandete Ausnehmungen zur bereichsweisen Aufnahme eines Abschnitts der zumindest einen weiteren Montageschiene vorgesehen. Die Ränder der Montageöffnung werden im verspannten Zustand der Verbindungsvorrichtung von den Ausnehmungen teilweise umfasst, wodurch die zumindest eine weitere Montageschiene auch unter Last seitlich gehalten wird. Insbesondere bei einem Gitterträger als Montageschiene sind die Ausnehmungen derart ausgebildet, dass die Längsdrähte im verspannten Zustand der Verbindungsvorrichtung annähernd über ihren halben Umfang von diesen umfasst und somit der Gitterträger gegen seitliche Belastungen gesichert wird.

Vorzugsweise ist das Verbindungselement ein Stanz-/Biegeteil, wodurch dieses einfach und kostengünstig, beispielsweise aus Blech herstellbar ist. Vorteilhafterweise ist der Anschlag des Befestigungselementes beziehungsweise des Befestigungsmittels ebenfalls als Stanz-/Biegeteil ausgebildet.

Die Erfindung wird nachstehend anhand von Ausführungsbeispielen näher erläutert. Es zeigen:
- Fig.1: Eine Seitenansicht auf zwei T-Verbindungen von Montageschienen mit der erfindungsgemässen Verbindungsvorrichtung;
- Fig. 2: eine Seitenansicht auf eine erfindungsgemässe Verbindungsvorrichtung;
- Fig. 3: eine Ansicht auf die Verbindungsvorrichtung aus der Ebene III-III in Fig. 2; und
- Fig. 4: eine Seitenansicht auf eine Doppel-T-Verbindung von Montageschienen mit zwei erfindungsgemässen Verbindungsvorrichtungen.

Grundsätzlich sind in den Figuren gleiche Teile mit den gleichen Bezugszeichen versehen.

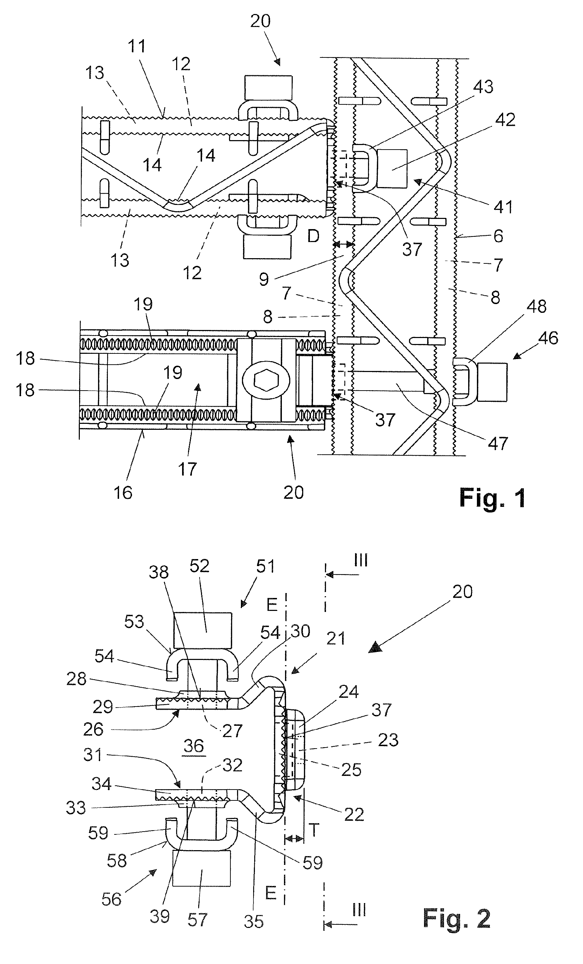

In der Figur 1 ist eine Gitterschiene als erste Montageschiene 6 sowie zwei an der ersten Montageschiene 6 festzulegende Gitterschienen als weitere Montageschienen 11 und 16 dargestellt, die jeweils mittels einer Verbindungsvorrichtung 20 lösbar an der ersten Montageschiene 6 festgelegt sind. Die eine weitere Montageschiene 11 ist um deren Längsachse um 90° verdreht gegenüber der anderen weiteren Montageschiene 16 angeordnet. Alle Montageschienen 6, 11 und 16 weisen die gleichen Abmessungen und Ausgestaltungen und somit jeweils zwei in Längserstreckung der Montageschiene 6, 11 und 16 verlaufende, einander gegenüberliegende Montageöffnungen 7, 12 und 17 auf. Jeweils zwei Längsdrähte eines Traggurtes der Gitterschienen bilden die Ränder 8, 13 und 18 aus, welche die Montageöffnungen 7, 12 und 17 seitlich begrenzen.

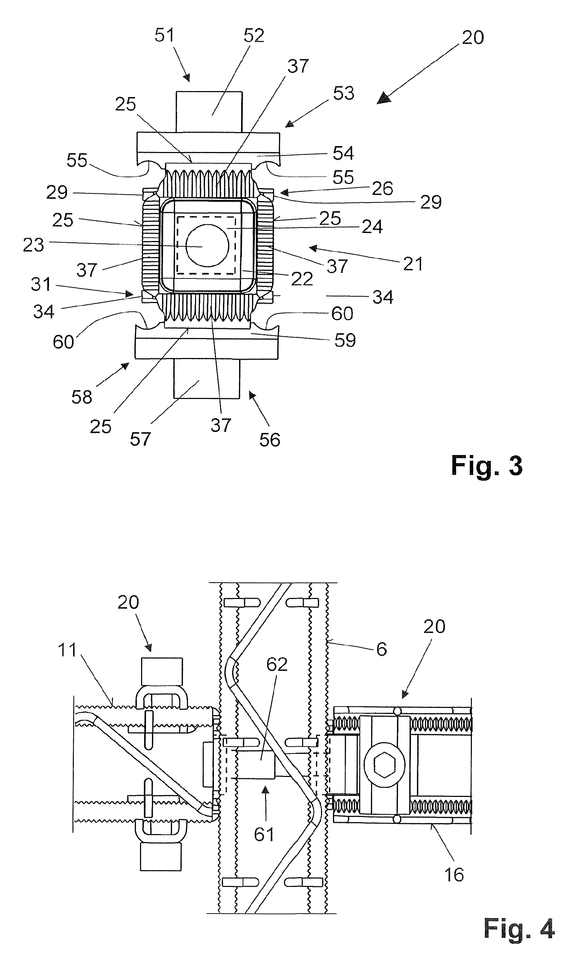

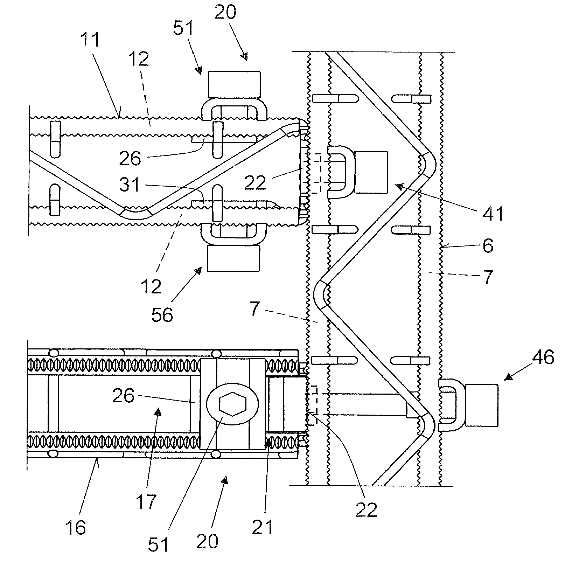

Die Verbindungsvorrichtung 20, wie sie in den Figuren 2 und 3 dargestellt ist, weist ein Verbindungselement 21 sowie Befestigungselemente 51 und 56 auf. Das Verbindungselement 21 weist einen Basisabschnitt 22 mit einer Durchführöffnung 23 für eine Spannschraube 42, 47 oder 62 als Befestigungsmittel 41, 46 bzw. 61 zum Festlegen des Verbindungselementes 21 an der ersten Montageschiene 6, einen ersten Schenkelabschnitt 26 und einen zweiten Schenkelabschnitt 31 auf. Das Verbindungselement 21 ist ein aus einem Blech gefertigtes Stanz-/Biegeteil.

An dem Basisabschnitt 22 ist eine zu den Seitenrändern 25 des Basisabschnitts 22 beabstandete taschenförmige Vertiefung 24 zur Aufnahme eines hier nicht dargestellten Mutterelementes für die Spannschraube 42, 47 oder 62 ausgebildet. Die taschenförmige Vertiefung 24 erstreckt sich von einer von dem Basisabschnitt 22 aufgespannten Ebene E mit einer Tiefe T und ist von einem von dem ersten Schenkelabschnitt 26 und dem zweiten Schenkelabschnitt 31 gebildeten Raum 36 abgewandt ausgerichtet. Der Betrag der Tiefe T der taschenförmigen Vertiefung 24 ist kleiner als die Dicke D des Längsdrahtes 9 der ersten Montageschiene 6, der den die Montageöffnung 7 begrenzenden Rand 8 ausbildet. An allen Seitenrändern 25 des Basisabschnitts 22 ist eine Profilierung 37 in Form einer Zahnung vorgesehen.

Der erste Schenkelabschnitt 26 weist eine Öffnung 27 für das Befestigungselement 51 auf und bildet ein Hintergreifteil zum Hintergreifen der Montageöffnung 12 bzw. 17 der weiteren Montageschiene 11 bzw. 16 beziehungsweise der die Montageöffnung 12 bzw. 17 begrenzenden Bereiche aus. Die Öffnung 27 ist von einem Kragen 28 umgeben, wobei die Öffnung 27 und der Kragen 28 ein Innengewinde für den Eingriff der Spannschraube 52 des Befestigungselementes 51 aufweist. An den einander gegenüberliegenden Seitenrändern 29 des ersten Schenkelabschnitts 26, die sich von dem Basisabschnitt 22 in Richtung eines freien Endes des ersten Schenkelabschnitts 26 erstrecken, ist jeweils eine Profilierung 38 in Form einer Zahnung vorgesehen. Die Profilierung 38 ist zumindest teilweise komplementär zu einer an der weiteren Montageschiene 11 bzw. 16 angeordneten Profilierung 14 bzw. 19 ausgebildet. Der erste Schenkelabschnitt 26 ist über einen Federbereich 30 mit dem Basisabschnitt 22 verbunden.

Der zweite Schenkelabschnitt 31 ist analog dem ersten Schenkelabschnitt 26 ausgebildet und bildet ebenfalls ein Hintergreifteil aus. Der zweite Schenkelabschnitt 31 weist eine Öffnung 32 für das Befestigungselement 56 auf. Die Öffnung 32 ist von einem Kragen 33 umgeben, wobei die Öffnung 32 und der Kragen 33 ein Innengewinde für den Eingriff der Spannschraube 57 des Befestigungselementes 56 aufweist. An den einander gegenüberliegenden Seitenrändern 34 des zweiten Schenkelabschnitts 31, die sich von dem Basisabschnitt 22 in Richtung des freien Endes des zweiten Schenkelabschnitts 31 erstrecken, ist jeweils eine Profilierung 39 in Form einer Zahnung vorgesehen. Die Profilierung 39 ist zumindest teilweise komplementär zu einer an der weiteren Montageschiene 11 bzw. 16 angeordneten Profilierung 14 bzw. 19 ausgebildet. Auch der zweite Schenkelabschnitt 31 ist über einen Federbereich 35 mit dem Basisabschnitt 22 verbunden.

Der erste Schenkelabschnitt 26 und der zweite Schenkelabschnitt 31 sind jeweils senkrecht zu der von dem Basisabschnitt 22 aufgespannten Ebene E ausgerichtet und beabstandet zueinander an dem Basisabschnitt 22 angeordnet. Die Profilierungen 38 und 39 sind an den Seiten des jeweiligen Schenkelabschnitts 26 bzw. 31 angeordnet ist, die dem anderen Schenkelabschnitt 31 bzw. 26 abgewandt ist.

Das an dem ersten Schenkelabschnitt 26 angeordnete Befestigungselement 51 weist ein U-förmiges Bügelelement als Anschlag 53 auf, der mit der weiteren Montageschiene 11 bzw. 16 beim Verspannen des Befestigungselementes 51 in Anlage kommt. Die freien Schenkel 54 des Anschlags 53 sind dem ersten Schenkelabschnitt 26 zugewandt und weisen jeweils zwei zueinander beabstandete Ausnehmungen 55 zur bereichsweisen Aufnahme eines Abschnitts der weiteren Montageschiene 11 bzw. 16 auf.

Das an dem zweiten Schenkelabschnitt 31 angeordnete Befestigungselement 56 ist analog dem Befestigungselement 51 ausgebildet. Auch das Befestigungselement 56 weist ein U-förmiges Bügelelement als Anschlag 58 auf, der mit der weiteren Montageschiene 11 bzw. 16 beim Verspannen des Befestigungselementes 56 in Anlage kommt. Die freien Schenkel 59 des Anschlags 58 sind dem zweiten Schenkelabschnitt 31 zugewandt und weisen jeweils zwei zueinander beabstandete Ausnehmungen 60 zur bereichsweisen Aufnahme eines Abschnitts der weiteren Montageschiene 11 bzw. 16 auf.

Die Befestigungsmittel 41 und 46 weisen ebenfalls ein U-förmiges Bügelelement als Anschlag 43 bzw. 48 auf, der mit der ersten Montageschiene 6 beim Verspannen des Befestigungsmittels 41 bzw. 46 in Anlage kommt. Die Anschläge 54 und 59 der Befestigungselemente 51 und 56 sowie die Anschläge 43 und 48 der Befestigungsmittels 41 und 46 sind jeweils aus einem Blech als Stanz-/Biegeteil gefertigt.

Wie die Figur 4 zeigt, lässt sich mit zwei Verbindungsvorrichtungen 20 einfach eine Doppel-T-Verbindung beziehungsweise Kreuzverbindung von Montageschienen 6, 11 und 16 mit einer Spannschraube 62 als Befestigungsmittel 61 erstellen. Die weiteren Montageschienen 11 und 16 sind in diesem Ausführungsbeispiel um 90° zueinander verdreht an der ersten Montageschiene 6 festgelegt.

## Patentansprüche

1. Verbindungsvorrichtung zum lösbaren Verbinden von einer ersten Montageschiene (6) mit zumindest einer weiteren Montageschiene (11, 16) mit einem Verbindungselement (21) und mit Befestigungselementen (51, 56), **dadurch gekennzeichnet, dass**
das Verbindungselement (21) einen Basisabschnitt (22) mit einer Durchführöffnung (23) für ein Befestigungsmittel (41, 46, 61) zum Festlegen des Verbindungselementes (21) an der ersten Montageschiene (6), einen ersten Schenkelabschnitt (26) und einen zweiten Schenkelabschnitt (31) aufweist, wobei
der erste Schenkelabschnitt (26) und der zweite Schenkelabschnitt (31) jeweils senkrecht zu einer von dem Basisabschnitt (22) aufgespannten Ebene (E) ausgerichtet und beabstandet zueinander an dem Basisabschnitt (22) zum Festlegen der zumindest einen weiteren Montageschiene (11, 16) angeordnet sind, wobei
der erste Schenkelabschnitt (26) und der zweite Schenkelabschnitt (31) jeweils zumindest eine Öffnung (27, 32) für zumindest ein Befestigungselement (51, 56) aufweisen.

2. Verbindungsvorrichtung nach Anspruch 1, **dadurch gekennzeichnet, dass** an dem ersten Schenkelabschnitt (26) und an dem zweiten Schenkelabschnitt (31) jeweils eine an deren Seitenrändern (29, 34) angeordnete Profilierung (38, 39) vorgesehen ist, die sich von dem Basisabschnitt (22) in Richtung eines freien Endes des jeweiligen Schenkelabschnitts (26, 31) erstreckt, wobei
die Profilierung (38, 39) an den Seiten des jeweiligen Schenkelabschnitts (26, 31) angeordnet ist, die dem anderen Schenkelabschnitt (31, 26) abgewandt ist.

3. Verbindungsvorrichtung nach Anspruch 1 oder 2, **dadurch gekennzeichnet, dass** zumindest einer der Schenkelabschnitte (26, 31) über einen Federbereich (30, 35) mit dem Basisabschnitt (22) verbunden ist.

4. Verbindungsvorrichtung nach einem der Ansprüche 1 bis 3, **dadurch gekennzeichnet, dass** eine zu den Seitenrändern (25) des Basisabschnitts (22) beabstandete taschenförmige Vertiefung (24) an dem Basisabschnitt (22) ausgebildet ist, die sich von der von dem Basisabschnitt (22) aufgespannten Ebene (E) mit einer Tiefe (T) erstreckt und von einem von dem ersten Schenkelabschnitt (26) und dem zweiten Schenkelabschnitt (31) gebildeten Raum (36) abgewandt ist.

5. Verbindungsvorrichtung nach Anspruch 4, **dadurch gekennzeichnet, dass** eine Profilierung (37) an zumindest zwei, einander gegenüberliegenden Seitenrändern (25) des Basisabschnitts (22) vorgesehen ist.

6. Verbindungsvorrichtung nach einem der Ansprüche 2 bis 5, **dadurch gekennzeichnet, dass** die Profilierung (37, 38, 39) eine Zahnung ist.

7. Verbindungsvorrichtung nach einem der Ansprüche 1 bis 6, **dadurch gekennzeichnet, dass** das Befestigungselement (51, 56) einen Anschlag (53, 58) aufweist, der mit der zumindest einen weiteren Montageschiene (11, 16) in Anlage bringbar ist.

8. Verbindungsvorrichtung nach Anspruch 7, **dadurch gekennzeichnet, dass** der Anschlag (53, 58) des Befestigungselementes ein U-förmiges Bügelelement ist, dessen freie Schenkel (54, 59) dem jeweiligen Schenkelabschnitt (26, 31) zugewandt sind.

9. Verbindungsvorrichtung nach Anspruch 8, **dadurch gekennzeichnet, dass** an jedem freien Schenkel (54, 59) eines Anschlags (53, 58) zwei zueinander beabstandete Ausnehmungen (55, 60) zur bereichsweisen Aufnahme eines Abschnitts der zumindest einen weiteren Montageschiene (11, 16) vorgesehen sind.

10. Verbindungsvorrichtung nach einem der Ansprüche 1 bis 9, **dadurch gekennzeichnet, dass** das Verbindungselement (21) ein Stanz-/Biegeteil ist.
